# EUROPÄISCHE PATENTSCHRIFT

(11) **EP 1 210 165 B1**
(45) Veröffentlichungstag und Bekanntmachung des Hinweises auf die Patenterteilung: **17.12.2003**
(21) Anmeldenummer: 00972584.7
(22) Anmeldetag: 08.09.2000
(51) Int. Cl.: B01D 29/21, B01D 29/96, B01D 35/147

(54) **FILTER MIT VENTIL-KOMBINATIONSBAUTEIL**
FILTER WITH A VALVE COMBINATION COMPONENT
FILTRE COMPORTANT UN ELEMENT SOUPAPE MULTIFONCTIONNEL

(30) Priorität: 09.09.1999 DE 29915844 U
(43) Veröffentlichungstag der Anmeldung: 05.06.2002
(73) Patentinhaber: Hengst GmbH & Co. KG, 48147 Münster (DE)
(72) Erfinder: BAUMANN, Dieter, 48268 Greven (DE); ARDES, Wilhelm, 59387 Ascheberg (DE)
(74) Vertreter: Habbel, Hans-Georg, Dipl.-Ing.
(86) Internationale Anmeldenummer: DE0003125
(87) Internationale Veröffentlichungsnummer: WO01017658

(56) Entgegenhaltungen:
- DE-A- 4 214 500
- DE-A- 4 446 263
- DE-U- 29 610 290
- DE-U- 29 915 844
- GB-A- 2 279 725

## Beschreibung

Die Erfindung betrifft einen Filter nach dem Oberbegriff des Anspruchs 1, wie er beispielsweise als Ölfilter für Verbrennungsmotoren in der Automobilindustrie einsetzbar ist. Ein derartiger Filter ist aus der GB-A-227,97,25 oder aus der DE-A-421,45,00 bekannt. Diese bekannten Filter weisen jeweils ein Kombinationsbauteil mit einem Ventilkörper auf sowie mit den zugeordneten Ventilsitz.

In einem Ölfilter für Verbrennungsmotoren in der Automobilindustrie können eir. oder mehrere Ventile vogeshen sein wie zum Beispiel erstens ein Rücklauf-Sperrventil, welches aufgrund des vom Motor aufgebauten Öldrucks öffnet, wenn das Öl in den Filter einströmt. Bei Motorstillstand und dementsprechend abgefallenem Öldruck schließt das Rücklauf-Sperrventil und stellt so eine Mindestölmenge innerhalb des Filters sicher. Zweitens kann ein Filterumgehungsventil vorgesehen sein, um bei stark verschmutztem Filtermedium oder bei zu großer Viskosität des Öls einen kurzschlußartigen Betrieb des Filters zu ermöglichen. Dabei wird bei einem bestimmten Überdruck, der auf der Rohölseite des Filters herrscht, das Filterumgehungsventil geöffnet und eine Passage zu dem Filter-Auslaß, der an sich für das Reinöl vorgesehen ist, geöffnet. Dritens kann ein Ablassventil vorgesehen sein, das dann, wenn der Filter geöffnet wird, um den Filtereinsatz zu wechseln, in Abhängigkeit von der Bewegung des Deckels und des Filtereinsatzes öffnet, so daß im Innenraum des Filtergehäuses befindliches Öl abfließen kann. Hierdurch wird eine möglichst verschmutzungsarme Entnahme des Filtereinsatzes ermöglicht.

Bei dem Kombinationsbauteil der gattungsgemäßen Filter muß erstens der Ventilsitz hergestellt werden und zweitens erschwert dieser die Herstellung des Kombinationsbauteils, da entweder der Ventilkörper oder der Ventilsitz schlecht zugänglich ist.

Der Erfindung liegt die Aufgabe zugrunde, einen gattungsgemäßen Filter dahingehend zu verbessern, daß dieser möglichst preisgünstig hergestellt und insbesondere schnell montiert werden kann.

Diese der Erfindung zugrundeliegende Aufgabe wird durch einen Filter mit den Merkmalen des Anspruches 1 gelöst.

Die Erfindung schlägt mit anderen Worten vor, zusätzlich zu dem Ventil weitere Funktionen in einem Kombinationsbauteil zu vereinigen, z. B. mehrere Ventilfunktionen. Da der Ventilsitz von dem Kombinationsbauteil getrennt angeordnet ist, wird die Montage bei der Herstellung des Kombinationsbauteils erleichtert und in kürzerer Zeit möglich. Da erst mit der Endmontage des Filters ein funktionsfähiges Ventil erstellt wird, ist eine besonders einfache Vormontage des Kombinationsbauteiles möglich, weil dieses die Ventilkörper in einer Weise aufnehmen bzw. aufweisen kann, daß sie noch nicht an ihren Ventilsitzen anliegen müssen, daher besonders leicht zugänglich sind und dementsprechend einfach und schnell montiert werden können. Die zugeordneten Ventilsitze können demgegenüber beispielsweise vom Filtergehäuse bzw. Filtersockel ausgebildet werden oder vom Filtereinsatz, so dass sich zusätzlich zu der Herstellungsvereinfachung vorteilhaft ergibt, dass ein Bauteil, nämlich ein als eigenes Bauteil augestalteter Ventilsitz, eingespart werden kann.

Eine schnelle Montage des Filters wid durch Verwendung vorgefertigter Baugruppen ermöglicht. Insbesondere wenn Teile des Filters, wie beispielsweise der Filtersockel, am Motorgehäuse einteilig angegossen vorgesehen sind, erfolgt die Montage bzw. Komplettierung zur Fertigstellung des Filters im Automobilwerk. Anstelle einer vollautomatisierten Fertigstellung eines kompletten Filters beim Filterhersteller wird die Herstellung teilweise zum Automobilhersteller verlagert, so daß hier eine erhebliche Vereinfachung der Montage und damit eine kostengünstigere Fertigung dadurch erzielt werden kann, daß die Anzahl der zu montierenden Bauteile verringert werden kann.

Zusätzlich zu dem an sich vorgesehenen ersten Ventil, beispielsweise dem Rücklauf-Sperrventil, kann daher das Kombinationsbauteil entweder das Umgehungsventil oder das Ablassventil aufweisen oder ggf. beide, wobei außer dem vorerwähnen ersten Ventil komplette Ventile vorgesehen sein können, die jeweils den beweglichen Ventilkörper aufweisen sowie die dem Ventilkörper zugeordnete, als Ventilsitz bezeichnete Dichtungsfläche. Vorteilhaft jedoch kann vorgesehen sein, daß auch bei den zusätzlich vogsehenen Ventilen erst mit der Endmontage des Filters jeweils ein funktionsfähiges Ventil erstellt wird. In diesem Fall ist eine besonders einfache Vormontage des Kombinationsbauteiles möglich, weil dieses die Ventilkörper in einer Weise aufnehmen bzw. aufweisen kann, daß sie noch nicht an ihren Ventilsitzen anliegen müssen, daher besonders leicht zugänglich sind und dementsprechend einfach und schnell montiert werden können. Die zugeordneten Ventilsitze können demgegenüber beispielsweise vom Filtergehäuse bzw. Filtersockel ausgebildet werden oder vom Filtereinsatz.

Alternativ zur Anordnung eines oder mehrerer weiterer Ventile kann das Kombinationsbauteil mit anderen Bauteilen des Filters verbunden oder verbindbar sein, um eine schnelle Montage durch hochintegrierte Baugruppen zu ermöglichen. So kann vorgesehen sein, das Kombinationsbauteil mit einem Filtereinsatz oder einem an sich bekannten Stützdom für den Filtereinsatz zu verbinden. Im Automobilwerk muß der Filtereinsatz vielfach, je nach Filtertyp, ohnehin montiert werden, so daß hier durch die nun mögliche gleichzeitige Montage eines oder mehrerer Ventile Arbeitsschritte eingespart werden können.

Bei Verbindung mit einem Filtereinsatz, dessen regelmäßiger Wechsel vorgesehen ist, kann der Filtereinsatz vorteilhaft lösbar mit dem Kombinationsbauteil verbunden sein, z. B. durch eine schwach haltende Clips- bzw. Schnappverbindung, so daß beide gemeinsam zunächst als eine einheitliche Baugruppe montiert werden können. Das Kombinationsbauteil kann dann jedoch ökologisch und ökonomisch vorteilhaft als filterfestes Lebensdauerteil im Filter verbleiben und bei einem Wechsel des Filtereinsatz problemlos vom Filtereinsatz gelöst werden.

Ausführungsbeispiele der Erfindung, die jeweils Filtertypen mit einem dezentralen Ölablass betreffen, werden anhand der Zeichnungen im folgenden näher erläutert. Dabei zeigt
- Fig. 1a - 1d: ein erstes Ausführungsbeispiel, wobei in den Fig. 1a - 1 c der gesamte Filter in verschiedenen Betriebszuständen dargestellt ist und in Fig. 1d das Kombinationsbauteil in Alleinstellung,
- Fig. 2 und 3: jeweils ein weiteres Ausführungsbeispiel, und
- Fig. 4a - 4b: ein weiteres Ausführungsbeispiel, ebenfalls in verschiedenen Betriebszuständen.

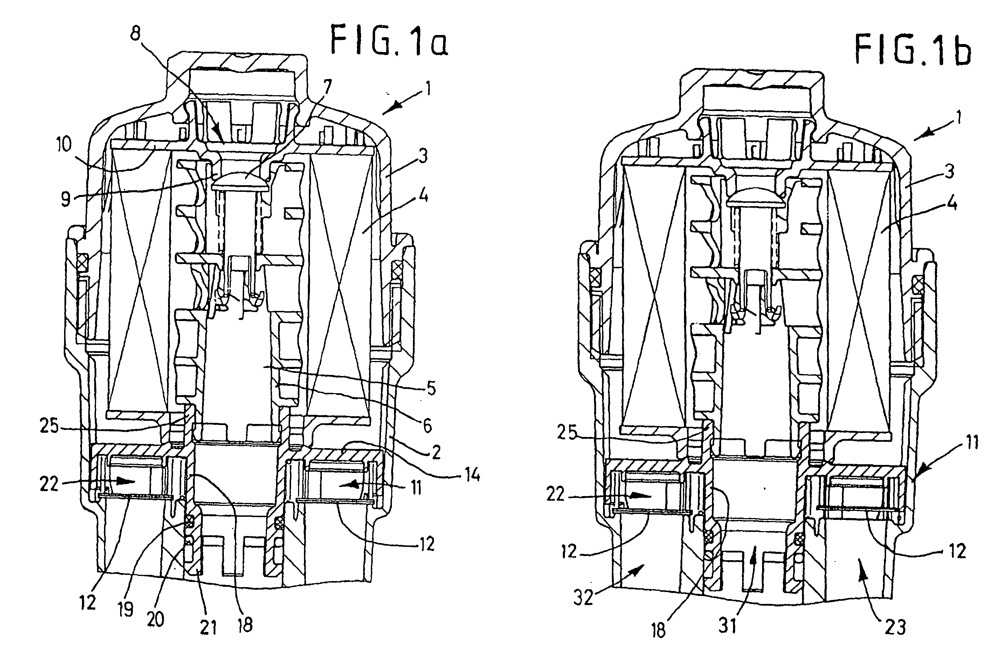

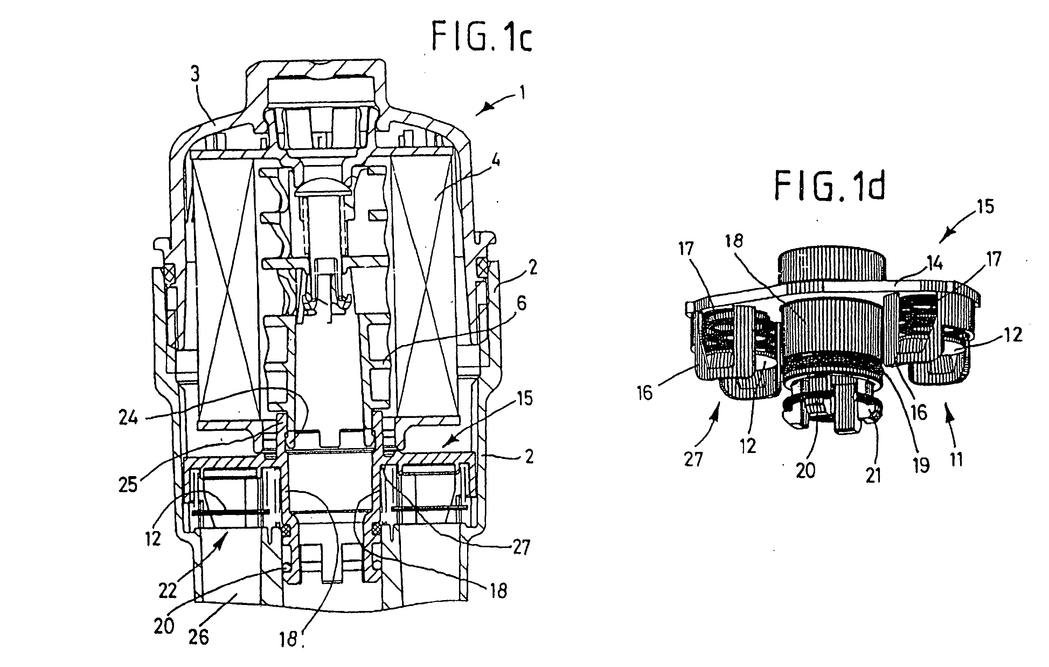

In Fig. 1a ist ein Filter 1, der als Ölfilter für einen Verbrennungsmotor vorgesehen ist, im Zustand des Motorstillstandes dargestellt. Der Filter 1 weist ein Filtergehäuse 2 und einen Deckel 3 auf sowie einen auswechselbaren Filtereinsatz 4. Der Filtereinsatz 4 umschließt einen Innenraum 5, in dem ein Stützdom 6 angeordnet ist, der ein Kollabieren des Filtermaterials des Filtereinsatzes 4 bei den im Ölfilter herrschenden Druck- und Temperaturbedingungen verhindert.

Der Stützdom 6 hält einen Ventilkörper 7 eines Filterumgehungsventils 8: Bei außerhalb des Filtereinsatzes 4 herrschendem großen Druck wird der Ventilkörper 7 nach unten gedrückt und öffnet dabei einen Strömungsweg zwischen dem Ventilkörper 7 und seinem zugeordneten Ventilsitz, der durch einen Kragen 9 gebildet wird, welcher von einer oberen Endscheibe 10 des Filtereinsatzes 4 gebildet ist.

Weitere Ventile des Filters 1 sind in Form von zwei grundsätzliche gleich ausgestalteten Ventilen vorgesehen, die jeweils einen Ventilkörper 12 in Form eines Plättchens aufweisen und die als Rücklauf-Sperrventil 11 und als Ablassventil 22 dienen Die Ventilkörper 12 stützen sich jeweils mittels einer Druckfeder gegen eine Grundplatte 14 eines Kombinationsbauteiles 15 ab, welches im einzelnen aus Fig. 1d ersichtlich ist:

An der Grundplatte 14 sind für das Rücklauf-Sperrventil 11 und das Ablassventil 22 Halterungen 16 vorgesehen, gegen welche die Ventilkörper 12 durch Federn 17 gedrückt werden. Auf diese Weise sind die Ventilkörper 12 unverlierbar am Kombinationsbauteil 15 gehalten, so daß das Kombinationsbauteil 15 vormontiert versandfertig ist und die Montage des Kombinationsbauteiles 15 beim Einsatz in ein Filtergehäuse 2 erleichtert wird.

Weiterhin weist das Kombinationsbauteil 15 einen Rohrstutzen 18 auf. Der Rohrstutzen 18 trägt eine Dichtung 19, beispielsweise aus einem Elastomer, und einen Haltering 20, beispielsweise aus Metall, der in der Hinterschneidung von federelastischen Haltekrallen 21 angeordnet ist. Der Haltering 20 kann durch seine Spreizkraft den Rohrstutzen 18 innerhalb des Filtersockels halten, ohne daß Hinterschneidungen erforderlich sind, so daß eine aufwendige Bearbeitung des Filtersockels zur Aufnahme der Haltekrallen 21 nicht erforderlich ist.

In Fig. 1 b ist die übliche Betriebsstellung des Filters 1 dargestellt. Dabei ist der Ventilkörper 12 des Rücklauf-Sperrventiles 11 durch Öl angehoben, welches durch einen Zulauf 23 in den Filter 1 einströmt. Gefiltertes Öl gelangt durch einen Auslaß 31 zu den Schmierstellen. Das Ablassventil 22 hingegen ist geschlossen, da sein Ventilkörper 12 auf dem zugehörigen Ventilsitz aufliegt, der von dem Filtergehäuse 2 gebildet ist, so daß kein Öl aus dem oberhalb des Kombinationsbauteils 15 befindlichen Filterinneren in eine Ablaßleitung 32 gelangen kann.

In Fig. 1 c ist der Betriebszustand des "Filterwechsels" dargestellt, bei dem nicht der komplette Filter 1, sondern lediglich der Filtereinsatz 4 gewechselt wird. Dabei ist ersichtlich,daß der Deckel 3 bereits gegenüber dem Filtergehäuse 2 angehoben ist.

Der Rohrstutzen 18 des Kombinationsbauteiles 15 ist mit dem Stützdom 6 verclipst, wobei sich der Stützdom 6 mittels einiger Haltekrallen 24 hinter einen Kragen 25 erstreckt, der am Rohrstutzen 18 vorgesehen ist. Der Rohrstutzen 18 und damit das gesamte Kombinationsbauteil 15 wird also gemeinsam mit dem Deckel 3 gegenüber dem Filtergehäuse 2 angehoben, beispielsweise durch einen Klemmsitz des Filtereinsatzes 4 am Stützdom 6 aufgrund deren abdichtender Verbindung miteinander, oder mit Hilfe einer Feder 27.

Der Haltering 20 begrenzt den nach oben möglichen Weg des Kombinationsbauteiles 15, entweder allein aufgrund seiner Klemmkraft, oder mit Hilfe einer umlaufenden Nut, die im Filtergehäuse 2 vorgesehen ist und die eine höhenfixierte Stellung des Halteringes 20 im Filtergehäuse 2 sicherstellt.
In dieser angehobenen Stellung des Kombinationsbauteiles 15 ist - wie aus Fig. 1c ersichtlich - der Ventilkörper 12 des Ablassventiles 22 von seinem zugeordneten Ventilsitz abgehoben, so daß Restöl aus dem Innenraum 5 und insgesamt aus dem Filtergehäuse 2 in eine Ablassleitung 26 einströmen kann. Die Gewindelänge zwischen Deckel 3 und Filtergehäuse 2 ermöglicht dabei einen vollständigen Ablass dieses Restöles, so daß bei Entnahme des Filtereinsatzes 4 aus dem Filtergehäuse 2 das Restöl möglichst rückstandsfrei vom Filtereinsatz 4 abgetropft ist.

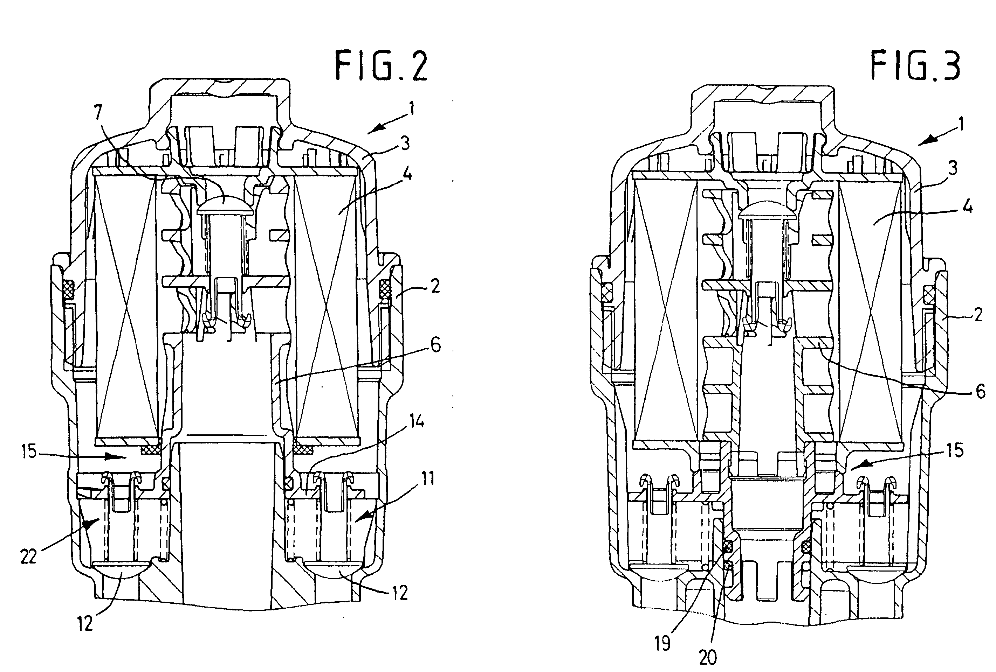

Fig. 2 zeigt ein zweites Ausführungsbeispiel, bei dem das Rücklauf-Sperrventil 11 und das Ablassventil 22 im Gegensatz zum ersten Ausführungsbeispiel andere Ventilkörper 12 aufweisen, wobei diese Ventilkörper 12 ähnlich oder baugleich mit dem Ventilkörper 7 des Filterumgehungsventiles ausgestaltet sind. Das Kombinationsbauteil 15 bildet bei diesem Ausführungsbeispiel sowohl die Grundplatte 14 als auch den Stützdom 6 aus, so daß mit der Montage lediglich dieser einen Baugruppe, nämlich des Kombinationsbauteiles 15, sämtliche Ventilfunktionen in den Filter 1 eingebaut werden. Die besonders einfache Herstellung und Montage des Kombinationsbauteiles 15 wird auch bei diesem Ausführungsbeispiel dadurch ermöglicht, daß die den Ventilkörpern 7 bzw. 12 zugeordneten Ventilsitze nicht an diesem Kombinationsbauteil 15 vorgesehen sind, sondern gehäuseseitig bzw. am Filtereinsatz 4.

Das Ausführungsbeispiel gemäß Fig. 3 zeigt in ähnlicher Ausgestaltung wie das Ausführungsbeispiel der Fig. 2 allerdings ein Kombinationsbauteil 15, welches ähnlich wie bei dem Ausführungsbeispiel der Fig. 1 separat vom Stützdom 6 hergestellt und lediglich anschließend auf die aus Fig. 1 bekannte Weise mit dem Stützdom 6 verbunden ist. Auf besonders preisgünstige Weise kann bei diesem Ausführungsbeispiel durch Verwendung unterschiedlicher Stützdome 6 eine Anpassung an unterschiedliche Filterabmessungen erfolgen. Auf besonders einfache Weise kann durch die Verwendung unterschiedlich hoher Filtereinsätze 4 eine Anpassung an die jeweils erforderliche Filterfläche erfolgen, wobei die Verwendung stets gleicher Filtergehäuse 2 möglich ist und dementsprechend lediglich unterschiedlich hohe Deckel 3 Verwendung finden müssen.

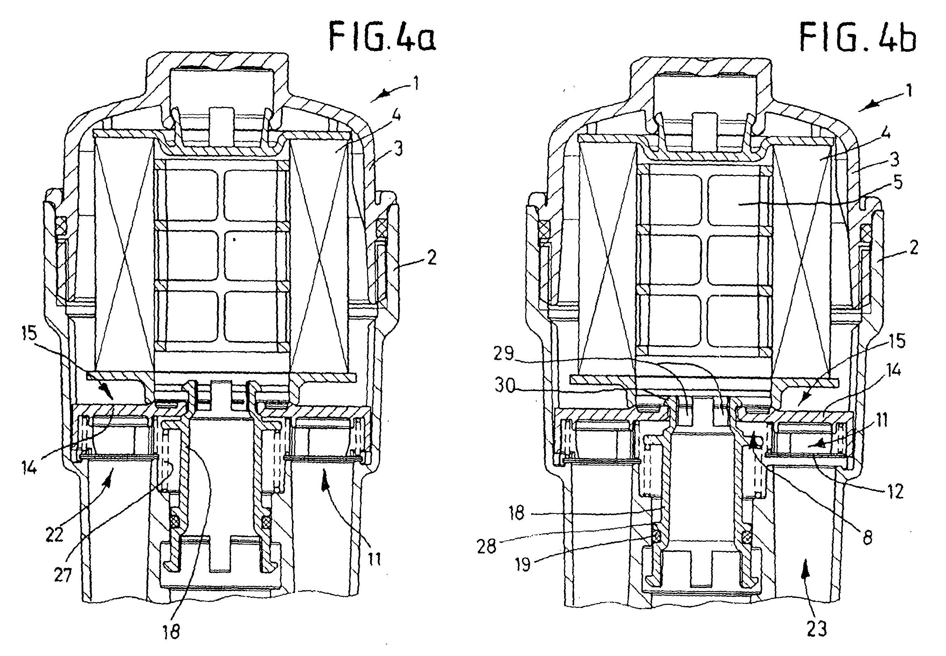

In den Fig. 4a und 4b ist ein Ausführungsbeispiel dargestellt, bei dem der Rohrstutzen 18 als eigenes Bauteil des Kombinationsbauteiles 15 ausgestaltet ist, so daß eine einfache Anpassung an den jeweiligen Auslaß unterschiedlicher Filtertypen bei Verwendung einer standardisierten Grundplatte 14 möglich ist. Dieser Rohrstutzen 18 der Fig. 4a und 4b ist nicht durch einen Haltering im Filtergehäuse 2 gehalten. Zudem bildet der Rohrstutzen 18 bei diesem Ausführungsbeispiel auch den beweglichen Ventilkörper des Filterumgehungsventils, welches bei diesem Ausführungsbeispiel unterhalb des Filtereinsatzes 4 vorgesehen ist.

In Fig. 4a ist der Filter 1 im Betriebszustand des Motorstillstandes dargestellt. Sowohl das Rücklauf-Sperrventil 11 als auch das Ablassventil 22 sind geschlossen. Durch die Kraft einer Feder 27 wird der Rohrstutzen 18 gegen die Grundplatte 14 des Kombinationsbauteiles 15 gedrückt.

Demgegenüber zeigt Fig. 4b den Betriebszustand, bei dem der Motor läuft und ein bestimmter Öldruck aufgebaut ist. Beispielsweise bei einem Kaltstart kann aufgrund der hohen Ölviskosität hier der Öldruck erreicht werden, bei dem das Filterumgehungsventil öffnet. Zunächst gelangt das Öl durch den Zulauf 23 an den Ventilkörper 12 des Rücklauf-Sperrventiles 11 und öffnet dieses Ventil. Das Öl fließt weiter und verteilt sich im Innenraum des Filtergehäuses 2 um den Filtereinsatz 4. Aufgrund der hohen Ölviskosität strömt das Öl nicht schnell genug in den Innenraum 5, so daß sich außerhalb des Filtereinsatzes 4 im Filter 1 ein Überdruck aufbaut, der schließlich auf eine Flanschplatte 28 am Rohrstutzen 18 drückt, so daß der Rohrstutzen 18 gegen die Wirkung der Feder 27 herabgedrückt wird. Mehrere Fenster 29 sind zwischen Haltekrallen 30 vorgesehen, durch die der Rohrstutzen 18 mit der Grundplatte 14 verbunden ist. Durch diese Fenster gelangt nun das Öl unmittelbar in einen Auslaß 31, der an sich für das Reinöl vorgesehen ist. Das Filterumgehungsventil 8 wird bei diesem Ausführungsbeispiel also durch den Rohrstutzen 18 und die Grundplatte 14 gebildet, so daß auch bei diesem Ausführungsbeispiel sämtliche Ventilfunktionen in dem Kombinationsbauteil 15 verwirklicht sind.

Die dargestellten Ausführungsbeispiele betreffen ausschließlich Filtertypen, bei denen der Ablaß wie die Ablaßleitung 32 dezentral angeordnet ist, also radial außerhalb des Auslasses verläuft, beispielsweise achsparallel. Demgegenüber sind auch Filtertypen bekannt, die einen sogenannten zentralen Ablaß aufweisen. Dabei strömt das Öl zunächst in einem eigenen, innerhalb der Auslaßöffnung vorgesehenen Strömungskanal, der z. B. koaxial um den eigentlichen Auslaßkanal, durch eine Trennwand abgetrennt, verläuft und der anschließend vom Auslaß abzweigt. Auch derartige Filter mit zentralem Auslaß können vorteilhaft erfindungsgemäß ausgestaltet sein.

## Patentansprüche

1. Filter, wie Ölfilter für eine Verbrennungskraftmaschine, mit einem Filtergehäuse,
und mit einem im Filtergehäuse angeordneten Ventil, wie einem Rückfluß-Sperrventil, einem Filterumgehungsventil oder einem Ablassventil,
wobei der Ventilkörper dieses Ventils an einem Kombinationsbauteil (15) angeordnet ist,
und dass das Kombinationsbauteil (15) Anschlußmittel aufweist zum Anschluß wenigstens eines weiteren Filterbauteils, wie eines weiteren Ventils oder eines Filtereinsatzes (4), an das Kombinationsbauteil (15),
**dadurch gekennzeichnet, dass** das Kombinationsbauteil (15) eine Grundplatte (14) aufweist, an welcher der Ventilkörper des Ventils federbeweglich gelagert ist, wobei der dem Ventilkörper zugeordnete Ventilsitz von dem Kombinationsbauteil (15) getrennt angeordnet ist.

2. Filter nach Anspruch 1, **dadurch gekennzeichnet, dass** die Grundplatte (14) eine Öffnung aufweist, an die sich ein Rohrstutzen (18) anschließt, welcher den Ventilkörper für das Ablassventil und/oder das Filterumgehungsventil (8) ausbildet.

3. Filter nach Anspruch 2, **dadurch gekennzeichnet, dass** der Rohrstutzen (18) als ein von der Grundplatte (14) separates Bauteil ausgestaltet ist.

4. Filter nach einem der vorhergehenden Ansprüche, **dadurch gekennzeichnet, dass** das Kombinationsbauteil (15) Anschlußmittel aufweist, an denen ein Filtereinsatz (4) lösbar angebracht oder anbringbar ist.

## Claims

1. Filter, like an oil filter for an internal combustion engine, incorporating a filter housing,
and with a valve arranged in the filter housing, a non-return valve, a filter bypass valve or a drain valve,
where the body of this valve is arranged on a combination component (15),
and the combination component (15) incorporates connecting means for the connection of at least one other filter component such as another valve or a filter insert (4), to the combination component (15),
**characterised in that** the combination component (15) incorporates a base plate (14), on which the valve body is spring-mounted, where the valve seat assigned to the valve body is arranged so as to be separate from the combination component (15).

2. Filter in accordance with claim 1, **characterised in that** the base plate (14) incorporates a hole, to which a pipe socket (18) forming the valve body for the drain valve and/or the filter bypass valve (8) is connected.

3. Filter in accordance with claim 2, **characterised in that** the pipe socket (18) is constructed as a separate component from the base plate (14)

4. Filter in accordance with one of the foregoing claims,
**characterised in that** the combination component (15) incorporates connecting means to which a filter insert (4) is detachably attached or can be attached.

## Revendications

1. Filtre, par exemple filtre à huile pour un moteur à combustion interne, comportant un boîtier de filtre
et une soupape agencée dans le boîtier du filtre, par exemple une soupape de retenue du reflux, une soupape de contournement du filtre ou une soupape de décharge,
le corps de soupape de cette soupape étant agencé sur un composant combiné (15),
le composant combiné (15) comportant des moyens de raccordement pour le raccordement d'au moins un composant additionnel du filtre, par exemple d'une soupape additionnelle ou d'un insert filtrant (4) sur le composant combiné (15),
**caractérisé en ce que** le composant combiné (15) comporte une plaque de base (14) sur laquelle le corps de soupape de la soupape est agencé de manière élastique mobile, le siège de soupape affecté au corps de la soupape étant agencé séparément du composant combiné (15).

2. Filtre selon la revendication 1, **caractérisé en ce que** la plaque de base (14) comporte une ouverture, à laquelle est raccordée une tubulure (18) constituant le corps de la soupape pour la soupape de décharge et/ou la soupape de contournement du filtre (8).

3. Filtre selon la revendication 2, **caractérisé en ce que** la tubulure (18) constitue un composant séparé de la plaque de base (14).

4. Filtre selon l'une des revendications précédentes, **caractérisé en ce que** le composant combiné (15) comporte des moyens de raccordement sur lesquels un insert filtrant (4) est agencé ou peut être agencé de manière amovible.
